# EUROPÄISCHE PATENTSCHRIFT

(11) **EP 0 685 925 B1**
(45) Veröffentlichungstag und Bekanntmachung des Hinweises auf die Patenterteilung: **15.03.2000**
(21) Anmeldenummer: 95108253.6
(22) Anmeldetag: 30.05.1995
(51) Int. Cl.: H02P 3/22, H02P 3/18

(54) **Servomotor**
Servo motor
Servomoteur

(30) Priorität: 01.06.1994 DE 4420349; 03.06.1994 DE 4419614
(43) Veröffentlichungstag der Anmeldung: 06.12.1995
(73) Patentinhaber: VICKERS INCORPORATED, Maumee, Ohio 43537 (US)
(72) Erfinder: Stillhard, Bruno, CH-9011 St. Gallen (CH)
(74) Vertreter: Gleiss, Alf-Olav, Dr.jur. Dipl.-Ing.

(56) Entgegenhaltungen:
- EP-A- 0 372 095
- US-A- 4 311 948
- PATENT ABSTRACTS OF JAPAN vol. 10 no. 352 (E-458) [2408] ,27.November 1986 & JP-A-61 150682 (YASKAWA ELECTRIC MFG CO LTD) 9.Juli 1986,
- PATENT ABSTRACTS OF JAPAN vol. 8 no. 124 (M-301) ,9.Juni 1984 & JP-A-59 028802 (MITSUBISHI DENKI KK) 15.Februar 1984,

## Beschreibung

Die Erfindung betrifft einen Servomotor mit einer Haupt-Spannungsversorgung, einer den Antrieb des Servomotors beeinflussenden Steuerschaltung, einer Bremsschaltung und mit einer Hilfs-Spannungsversorgung gemäß Oberbegriff des Anspruchs 1.

Mit dem Begriff Servomotoren werden hier allgemein regelbare Elektromotoren mit einer Servocharakteristik, insbesondere bürstenlose Motoren bezeichnet, die in zahlreichen Anwendungsfällen als Antrieb dienen. Im Zusammenhang mit derartigen Motoren werden Antriebsschaltungen verwendet, die unter anderem eine Haupt-Spannungsversorgung, eine den Antrieb des Motors beeinflussende Steuerschaltung und eine Bremsschaltung aufweisen. Die Schaltungselemente werden zur Verwirklichung von Sicherheitsstategien verwendet, die die Antriebselektronik, den Motor aber auch die von dem Motor angetriebene Vorrichtung schützen sollen. Beispielsweise werden die Haupt-Spannungsversorgung und/oder die Spannungen in den einzelnen Baugruppen der Antriebsschaltung des Servomotors überwacht und in einem Fehlerfall der Motor von der Spannungsversorgung getrennt, so daß dieser ohne Antrieb weiterläuft. Der Motor befindet sich damit im Leerlauf beziehungsweise in einem Zustand des free wheeling. Auch können die Temperatur der Schaltungselemente der Antriebsschaltung des Servomotors aber auch die Motortemperatur selbst erfaßt werden. Wird eine unzulässig hohe Temperatur festgestellt, wird der Motor in einen leistungslosen Zustand geschaltet, das heißt, es wird keine weitere Antriebskraft abgegeben, der Motor befindet sich damit im Leerlauf. Antriebe, welche aus voller Geschwindigkeit in einen free wheeling-Zustand und damit in einen unkontrollierten Zustand geschaltet werden, stellen für die angetriebene Vorrichtung beziehungsweise Maschine eine Zerstörungsgefahr dar.

Um derartig unkontrollierte Zustände zu vermeiden, werden Bremsen vorgesehen, beispielsweise Scheibenbremsen, die den Motor bei Unterbrechung der Versorgungsspannung oder bei Überhitzen zum Stillstand bringen. Bei Motoren mit einer großen trägen Masse werden auch sogenannte Überlastkupplungen verwendet, die den Motor bei einem auch als Notbremsung bezeichneten Bremsvorgang vom Antrieb trennen.

Es hat sich jedoch herausgestellt, daß derartige Bremssysteme keine ausreichende Sicherheit gewähren. Beispielsweise betragen die Vorschubgeschwindigkeiten bei elektrischen Spritzgießmaschinen (SPGM) Geschwindigkeiten bis zu 1000 mm/s. Bevor die Bremse am Motor überhaupt anspricht, vergehen 30 bis 100 ms, so daß sich in dieser Zeit eine ungebremste Vorschubbewegung von 30 bis 100 mm einstellt. Dabei können der Motor oder die angetriebene Maschine aber auch ein zwischengeschaltetes Getriebe Schaden nehmen.

Aus der EP 0 372 095 A1 ist eine Motorsteuerschaltung bekannt, die einen Gleichspannungszwischenkreis und eine Steuereinheit zur Ansteuerung des Motors durch den Gleichspannungskreis über eine Energieleitung bereitstellt. Kommt es zu einem Netzausfall, so wirkt der Motor als Generator, wobei die induzierte elektrische Energie über eine Leitung, ein Stellglied und eine weitere Leitung dem Gleichspannungszwischenkreis zugeführt wird. Dadurch soll die Steuereinheit für den Motor auch bei Netzausfall mit Energie versorgt werden. Nachteilig bei dem bekannten Motor ist, daß die Energiebereitstellung für die Steuereinheit bei Netzausfall relativ aufwendig ist.

Es ist daher Aufgabe der Erfindung, einen Servomotor zu schaffen, bei dem die Hilfs-Spannungsversorgung einfach bereitgestellt werden kann.

Diese Aufgabe wird bei einem Servomotor der eingangs genannten Art mit Hilfe der in Anspruch 1 aufgeführten Merkmale gelöst. Dadurch, daß die Hilfs-Spannungsversorgung durch Herunterteilen der auf einem Datenbus vorhandenen Spannung mit Energie versorgt wird, kann auf zusätzliche Energieversorgungsleitungen für die Steuerschaltung verzichtet werden. Dennoch ist die Steuerschaltung des Motors bei einer Notabschaltung zumindest während der Einleitung einer Notbremsung mit Energie versorgt. Über den Datenbus kann die Energie zur Notbremsung verwandt werden, die im Ansteuerungsbereich des Servomotors vorhanden ist. Es kann somit eine sehr schnelle Einleitung des Bremsvorgangs sichergestellt werden. Der Servomotor wird also unverzüglich aus dem angetriebenen Zustand in einen Abbremsungszustand übergeleitet, in dem eine kontrollierte maximale Abbremsung des Motors gewährleistet ist und Schäden mit großer Sicherheit vermieden werden.

Bevorzugt wird ein Servomotor, bei dem die Hilfs-Spannungsversorgung von einem der Haupt-Spannungsversorgung zugeordneten DC-Zwischenkreis (Gleichstrom-Zwischenkreis) mit Energie versorgt wird. Derartige Zwischenkreise werden häufig mit der Haupt-Spannungsversorgung gekoppelt. Sie weisen unter anderem Kapazitäten auf, die im Falle einer Notabschaltung beziehungsweise Notbremsung des Servomotors die zur Einleitung der Notbremsung erforderliche Energie liefern.

Bevorzugt wird weiterhin eine Ausführungsform des Servomotors, bei dem ein im Normalbetrieb des Servomotors aufladbarer Kondensator vorhanden ist, der die Hilfs-Spannungsversorgung bei einer Notabschaltung zumindest während der Einleitung einer Notbremsung mit Energie versorgt. Der Aufwand für die Realisierung dieser Schaltung ist geringfügig größer als bei der Heranziehung der in einem DC-Zwischenkreis vorhandenen Energie, so daß die Kosten für die Realisierung dieser Schaltung auf einem niedrigen Niveau gehalten werden können.

Bei einer weiteren bevorzugten Ausführungsform des Servomotors werden Batterien und/oder Akkumulatoren eingesetzt, die im Zusammenhang mit der Hilfs-Spannungsversorgung Verwendung finden. Auch diese Realisierung erlaubt eine relativ kostengünstige Realisierung der Notlaufeigenschaften des Servomotors.

Besonders bevorzugt wird eine Ausführungsform des Servomotors, der sich durch eine Überwachungsschaltung auszeichnet, die der Haupt- und/oder Hilf-Spannungsversorgung zugeordnet ist und bei einem unerwünschten Spannungsabfall eine Notbremsung auslöst, beispielsweise dadurch, daß die Steuerschaltung, die dem Antrieb des Servomotors dient, ein entsprechendes Geschwindigkeitssignal vorgibt. Bei einer Abbremsung des Motors wirkt dieser als Generator, so daß eine Spannung in die Versorgung eingespeist wird. Die Überwachungsschaltung ist so ausgelegt, daß dennoch, also auch bei sich erhöhenden Spannungsniveau in der Versorgung, der Bremsvorgang bis zum Stillstand des Servomotors fortgesetzt wird.

Eine Weiterbildung des Servomotors ist in Anspruch 12 angegeben. Durch eine Temperatur-Überwachungsschaltung werden die im Motor oder in dessen Antriebsschaltung vorhandenen Temperaturwerte erfaßt und bei Überschreiten einer vorgebbaren oberen Temperaturgrenze eine Notbremsung ausgelöst, die bis zum Stillstand des Servomotors fortgesetzt wird. Erst dann wird die Abschaltung der Energieversorgung der Antriebsschaltung und des Motors durchgeführt. Das heißt also, daß der Servomotor bei einer aufgrund Überhitzung gegebenen Funktionsstörung unmittelbar aus der Antriebsphase in eine Bremsphase überführt wird, so daß ein Leerlaufzustand beziehungsweise ein free wheeling auf jeden Fall vermieden werden. Auf diese Weise ist sichergestellt, daß nach Auftreten eines Überhitzungsfalls unabhängig von der bestehenden Energieversorgung des Motors und der Antriebsschaltung die Notbremsung durchgeführt werden kann.

Die Erfindung wird im folgenden anhand einer Zeichnung näher erläutert. Diese zeigt ein schematisches Blockschaltbild eines Servomotors mit Teilen einer mit diesem zusammenwirkenden Schaltung.

Der Servomotor 1 treibt eine Antriebswelle 3 an, die eine beliebige, hier nicht dargestellte Vorrichtung beziehungsweise Maschine direkt oder über ein Getriebe antreibt. Dem Servomotor 1 ist eine Haupt-Spannungsversorgung 5 zugeordnet, darüber hinaus eine den Antrieb des Servomotors 1 beeinflussende Steuerschaltung 7 sowie eine Bremsschaltung 9. Die Steuerschaltung 7 dient dem Antrieb des Servomotors 1 und gibt entsprechende Geschwindigkeitssignale an diesen ab. Durch die verschiedenen Signale kann der Servomotor 1 auf eine maximale Geschwindigkeit beschleunigt werden. Es ist auch möglich, diesen bis zum Stillstand herunterzufahren, indem ein Geschwindigkeitssignal "Null" vorgegeben wird.

Die der Versorgung des Servomotors 1 dienende Schaltung kann mit einer DC-Zwischenschaltung 11 versehen sein. Diese kann dazu dienen, im Zusammenhang mit der Steuerschaltung 7 die aktuelle Drehzahl des Servomotors 1 beispielsweise durch Frequenzwandlung einzustellen. Die DC-Zwischenschaltung 11 ist auf herkömmliche Weise realisiert, so daß auf deren einzelne Schaltungselemente hier nicht eingegangen zu werden braucht. Es sei lediglich darauf verwiesen, daß die DC-Zwischenschaltung 11 unter anderem auch Kondensatoren umfassen kann.

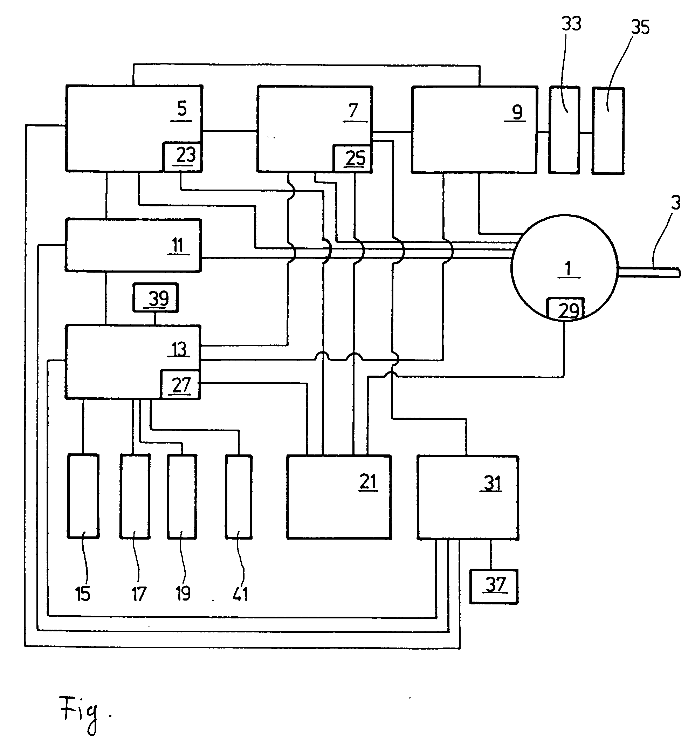

Es ist hier außerdem eine Hilfs-Spannungsversorgung 13 vorgesehen, die nach einem nicht gezeigten Ausführungsbeispiel unmittelbar mit der Haupt-Spannungsversorgung 5 oder -wie in der Figur dargestellt- über die DC-Zwischenschaltung 11 mit dieser verbunden ist. Außerdem sind geeignete Verbindungen zur Steuerschaltung 7 aber auch zur Bremsschaltung 9 vorgesehen.

Mit der Hilfsschaltung 13 können ein oder mehrere externe Kondensatoren 15, eine oder mehrere Batterien 17 und/oder ein oder mehrere Akkumulatoren 19 verbunden sein.

Es ist hier außerdem eine Temperatur-Überwachungsschaltung 21 vorgesehen, die mit Temperatursensoren verbunden ist. Ein erster Sensor 23 ist beispielsweise in der Haupt-Spannungsversorgung 5 vorgesehen, ein zweiter Sensor 25 in der Steuerschaltung 7, ein dritter Sensor 27 in der Hilfs-Spannungsversorgung 13 und ein vierter Sensor 29 im Servomotor 1. Selbstverständlich können auch weitere einzelne Bauelemente oder Baugruppen der mit dem Servomotor 1 zusammenwirkenden Antriebsschaltung mit Temperatursensoren versehen sein. Derartige Sensoren können auch mit der von dem Servomotor 1 angetriebenen Maschine oder dem zwischengeschalteten Getriebe verwendet werden.

In dem Blockschaltbild ist außerdem eine Spannungs-überwachungsschaltung 31 vorgesehen, die beispielhaft mit der Hauptspannungsversorgung 5 der DC-Zwischenschaltung 11 und der Hilfs-Spannungsversorgung 13 verbunden ist. Weitere Verbindungen können zu anderen Baugruppen der Schaltung bestehen.

Aus dem Blockschaltbild ist schließlich noch ersichtlich, daß die Bremsschaltung 9 mit einem Leistungsschalter 33 und mit einem Bremswiderstand 35 verbunden ist.

Im folgenden soll auf die Funktion der Schaltung näher eingegangen werden:

Der Servomotor 1 wird im störungsfreien Betrieb von der Haupt-Spannungsversorgung 5 mit Energie versorgt, wobei beispielsweise ein Drei-Phasen-Strom mit variabler Frequenz zur Verfügung steht. Verschiedene Geschwindigkeiten des Servomotors 1 können über die Steuerschaltung 7 eingestellt werden, die beispielsweise zusammen mit der DC-Zwischenschaltung 11 eine Frequenzwandlung ermöglicht.

In einem Fehlerfall wird die Notabschaltung des Servomotors 1 sichergestellt. Ein Fehlerfall kann beispielsweise darin bestehen, daß mit Hilfe der Temperatur-Überwachungsschaltung 21 eine erhöhte Temperatur über die Temperatursensoren 23 bis 29 in einem Teil der Gesamtschaltung erfaßt wird. Sobald dies der Fall ist, kann ein geeignetes Signal von der Temperatur-Überwachungsschaltung an die Steuerschaltung 7 abgegeben werden, die das Geschwindigkeits-Ansteuerungssignal "Null" an den Servomotor 1 abgibt und gleichzeitig die Bremsschaltung 9 aktiviert. Der aufgrund seiner Trägheit weiterlaufende Servomotor 1 wirkt nun als Generator. Die dabei abgegebene Energie wird von der Bremsschaltung 9 bei Erreichen einer bestimmten Spannungsgrenze über den Leistungsschalter 33 an den Bremswiderstand 35 abgegeben. Die Bremsschaltung 9 ist so ausgelegt, daß die Abbremsung des Servomotors 1 mit einem maximalen Strom erfolgen kann. Der Motor wird daher in kürzester Zeit bis zum Stillstand abgebremst, so daß dann über dessen Antriebswelle 3 keine weitere Energie abgegeben wird. Erst nach Erreichen des Stillstands des Motors wird dessen Spannungsversorgung abgeschaltet.

Besonders vorteilhaft ist, daß aufgrund der schnellen Abbremsung des Servomotors 1 auf überlastkupplungen, gegebenenfalls auch auf zusätzliche mechanischen Bremsen vollständig verzichtet werden kann und daß ein Leerlauf des Motors vermieden wird.

Eine Notabschaltung des Servomotors 1 wird auch durch die Spannungs-Überwachungsschaltung 31 sichergestellt, die über eine Spannungs-Vergleichsschaltung 37 verfügt, die die in der Haupt-Spannungsversorgung 5 und/oder in der Hilfs-Spannungsversorgung 13 zur Verfügung stehende Spannung erfaßt. Denkbar ist auch, daß die Spannungs-überwachungsschaltung 31 die in der DC-Zwischenschaltung 11 anliegende Spannung erfaßt. Insgesamt wird in allen Fällen durch die Spannungs-Vergleichsschaltung 37 jeweils ein unterer und oberer Spannungswert als Vergleichswert bereitgestellt, anhand dessen die Spannungen innerhalb der einzelnen Baugruppen der Schaltung verglichen werden können. Durch die Spannungs-Vergleichsschaltung 37 und die Spannungs-Überwachungsschaltung 31 wird ein Unterschreiten der Spannungen in der Haupt-Spannungsversorgung 5, der Hilf-Spannungsversorgung 13 und/oder der DC-Zwischenschaltung 11 erfaßt. Dadurch wird auf einen Fehler in der Energieversorgung des Servomotors 1 geschlossen und eine Notabschaltung veranlaßt.

Für diesen Fehlerfall ist die Hilfs-Spannungsversorgung 13 von äußerster Bedeutung. Sie versorgt insbesondere die Steuerschaltung 7 zumindest während der Einleitung einer Notbremsung mit Energie, so daß das Geschwindigkeits-Ansteuersignal "Null" an den Servomotor 1 abgegeben und die Notbremsung eingeleitet werden kann, auch wenn im übrigen die Spannungsversorgung zusammengebrochen ist. Die Hilfs-Spannungsversorgung 13 kann auch der Energieversorgung anderer wichtiger Teile der Antriebsschaltung dienen. Nach Erreichen des Motorstillstandes kann dann eine vollständige -kontrollierte- Abschaltung der Antriebsschaltung veranlaßt werden, vorzugsweise automatisch.

Um nach Einleitung einer auf einer Überhitzung beruhenden Notabschaltung auftretende Fehler in der Energieversorgung des Servomotors 1 beziehungsweise der mit diesem zusammenwirkenden Schaltung zu kompensieren, kann auch bei Erfassung einer Übertemperatur mit Hilfe der Temperatur-Überwachungsschaltung 21 die Hilfs-Spannungsversorgung 13 aktiviert werden, um die Notabschaltung unabhängig von der übrigen Energieversorgung des Gesamtsystems durchführen zu können. Dadurch wird eine besonders hohe Sicherheit der Notlaufeigenschaften des Servomotors 1 gewährleistet.

Die Hilfs-Spannungsversorgung 13 kann, wie aus dem Blockschaltbild ersichtlich, auf verschiedenste Weisen mit Energie versorgt werden, um die Einleitung einer Notbremsung gewährleisten zu können. Beispielsweise ist es möglich, die Hilfs-Spannungsversorgung 13 über die DC-Zwischenschaltung 11 mit Energie zu versorgen, falls diese mit Kondensatoren ausgestattet ist, die auch nach Zusammenbruch der Haupt-Spannungsversorgung 5 noch Energie gespeichert haben.

Denkbar ist es auch, daß die gesamte Antriebsschaltung mit einem Datenbus 39 verbunden ist, aus dem durch Herunterteilen der Spannung die Hilfs-Spannungsversorgung 13 mit Energie versorgt werden kann. Statt dessen oder auch zusätzlich kann die Hilfs-Spannungsversorgung 13 mit einem externen Kondensator 15 in Verbindung stehen, der im störungsfreien Normalbetrieb des Servomotors 1 auf geeignete Weise mit Energie versorgt wird, die dann während der Einleitung einer Notbremsung der Hilfs-Spannungsversorgung 13 zur Verfügung steht. Diese kann statt dessen oder zusätzlich mit einer Batterie 17 verbunden sein, die die Hilfs-Spannungsversorgung 13 mit Energie versorgt, so daß die Steuerschaltung 7 zumindest während der Einleitung einer Notbremsung mit Energie versorgt ist.

Schließlich kann die Hilfs-Spannungsversorgung 13 auch mit einem Akkumulator 19 verbunden sein, der in regelmäßigen Abständen ausgetauscht oder im Normalbetrieb über ein geeignetes, hier nicht dargestelltes Ladegerät aufgeladen wird. Der Akkumulator 19 dient dann als Energiequelle, aufgrund derer die Hilfs-Spannungsversorgung 13 zumindest während der Einleitung einer Notbremsung die Steuerschaltung 7 mit Energie versorgen kann.

In dem Blockschaltbild ist zusätzlich noch ein DC/DC-Wandler 41 eingezeichnet, der Teil der Gesamtschaltung und beispielsweise der Haupt-Spannungsversorgung zugeordnet sein kann und über den die Hilfs-Spannungsversorgung 13 mit Energie versorgt werden kann, so daß bei einer Notabschaltung die Steuerschaltung 7 zumindest während der Einleitung einer Notbremsung mit Energie versorgt werden kann.

Die Energieversorgung der Hilfs-Spannungsversorgung 13 kann, wie ersichtlich, auf verschiedenste Weisen sichergestellt werden.

Die Spannungs-Überwachungsschaltung 31 ist vorzugsweise so ausgestaltet, daß bei Erfassung eines Zusammenbruchs der Energieversorgung die Notabschaltung und Notbremsung des Servomotors 1 eingeleitet und bis zum Stillstand des Motors fortgesetzt wird. Auch wenn also der Servomotor 1 aufgrund seiner Massenträgheit nach Vorgabe eines Geschwindigkeits-Signals "Null" durch die Steuerschaltung 7 zunächst weiterläuft und als Generator wirkt, wird die Notbremsung fortgesetzt. Die Generatorwirkung des Motors kann dazu führen, daß die Spannungs-Überwachungsschaltung 31 ein Überschreiten des unteren Spannungsgrenzwertes feststellt, wobei sich ein Zustand ergibt, der dem einer fehlerfreien Energieversorgung des Systems entspricht.

Bei einer derartigen Spannungs-überwachungsschaltung 31 wird also sichergestellt, daß nach dem Unterschreiten des unteren Spannungsgrenzwertes eine Notabschaltung beziehungsweise Notbremsung des Servomotors 1 bis zu dessen vollständigen Stillstand sichergestellt ist, auch wenn durch die Generatorwirkung des Motors das Gesamtsystem mit einer Spannung versorgt wird, aufgrund derer der untere Spannungsgrenzwert wieder überschritten wird und sich ein Zustand einstellt der bei einer fehlerfreien Spannungsversorgung der Gesamtschaltung gegeben ist.

Bei einer derartigen Auslegung der Spannungs-überwachungsschaltung 31 ergibt sich eine besonders hohe Funktionssicherheit der Gesamtschaltung des Servomotors 1.

Die Spannungs-überwachungsschaltung 31 kann mit Hilfe der Spannungs-Vergleichsschaltung 37 auch die Überschreitung eines oberen Spannungsgrenzwertes feststellen und ein entsprechendes Steuersignal an die Bremsschaltung 9 abgeben, die daraufhin -oder aber aufgrund einer eigenen Spannungs-Überwachungschaltung- den Leistungschalter 33 aktiviert, der darauf hin die vom Servomotor 1 abgegebene Energie an den Bremswiderstand 35 weiterleitet. Durch eine entsprechende Bemessung des Bremswiderstandes 35 kann der Servomotor 1 rasch abgebremst werden, so daß eine Gefährdung der mit dem Servomotor 1 zusammenwirkenden Gesamtschaltung aber auch einer mit der Antriebswelle 3 des Servomotors 1 verbundenen Maschine ausgeschlossen werden kann.

Es ist möglich, die Spannungs-Überwachungsschaltung 31 mit mehreren Servomotoren zu koppeln und die Spannungs-Überwachungsschaltung dabei so auszulegen, daß die Notbremsung der mehreren Motoren nacheinander erfolgt, um den Bremswiderstand 35 nicht zu überlasten. Es ist jedoch auch denkbar, bei mehreren Servomotoren jedem eine separate Bremsschaltung zuzuordnen, die dann jeweils einen eigenen Bremswiderstand umfaßt.

Die Temperatur-Überwachungsschaltung 21 ist vorzugsweise so ausgelegt, daß bei Überschreiten eines oberen Temperaturgrenzwertes zunächst die Notabschaltung und Notbremsung des Servomotors 1 mit einem maximalen Bremsstrom bis zum Motorstillstand durchgeführt wird, und daß dann die Spannungsversorgung des Servomotors 1 inaktiviert wird. In diesem Fall kann die Einleitung der Notbremsung noch bei eingeschalteter Energieversorgung erfolgen, wobei die Hilfs-Spannungsversorgung 13 für den Fall zur Verfügung steht, daß unmittelbar bei oder nach Erfassung einer übertemperatur und bei oder nach Auslösung einer Notabschaltung zusätzlich die Energieversorgung des Servomotors 1 über die Haupt-Spannungsversorgung 5 zusammenbricht. In einem derartigen Fall wird, wie oben bereits angedeutet, eine besonders hohe Sicherheit erreicht.

Die Hilfs-Spannungsversorgung 13 dient also dazu, in allen Fällen der Notabschaltung zumindest die Einleitung einer Notbremsung des Servomotors 1 sicherzustellen. Nachdem dieser als Generator wirkt, kann die erzeugte Energie für die kontrollierte Durchführung der Notbremsung bis zum Stillstand des Servomotors 1 ausgenutzt werden.

Es zeigt sich also, daß ein Servomotor 1, der mit einer in dem Blockschaltbild dargestellten Schaltung zusammenwirkt, unmittelbar aus dem kontrollierten angetriebenen Zustand in einen kontrollierten Bremszustand überführt werden kann, wobei ein unkontrollierter Leerlauf / free wheeling vermieden wird. Eine Gefährdung des Servomotors und nachgeschalteter Einrichtungen, also eines Getriebes beziehungsweise einer angetriebenen Maschine, können auf ein Minimum reduziert werden. Dabei können herkömmliche Sicherungseinrichtungen wie überlastkupplungen und mechanische Bremsen entfallen, so daß insgesamt eine kostengünstige Realisierung gegeben ist, auch wenn es sich bei dem Servomotor 1 um einen schnell-laufenden Motor handelt, der Vorrichtungen mit großer Massenträgheit antreibt.

Die in dem Blockdiagramm wiedergegebenen einzelnen Schaltungsteile beziehungsweise Baugruppen können Teil einer beliebigen Antriebsschaltung für den Servomotor 1 sein. Es gibt hier zahlreiche Realisierungsvarianten, auf die nach der Wiedergabe der Grundfunktion der Notabschaltung beziehungsweise Notbremsung des Servomotors 1 hier nicht mehr eingegangen zu werden braucht.

## Patentansprüche

1. Servomotor mit einer Haupt-Spannungsversorgung, einer den Antrieb des Servomotors beeinflussenden Steuerschaltung, einer Bremsschaltung und einer Hilfs-Spannungsversorgung, die die Steuerschaltung bei einer Notabschaltung des Servomotors zumindest während der Einleitung einer Notbremsung mit Energie versorgt, **dadurch gekennzeichnet**, daß die Hilfs-Spannungsversorgung (13) durch Herunterteilen der auf einem Datenbus (39) vorhandenen Spannung mit Energie versorgt wird.

2. Servomotor nach Anspruch 1, **dadurch gekennzeichnet**, daß die Hilfs-Spannungsversorgung (13) von einem der Haupt-Spannungsversorgung (5) zugeordneten DC-Zwischenkreis (11) mit Energie versorgt wird.

3. Servomotor nach einem der vorhergehenden Ansprüche, **dadurch gekennzeichnet**, daß die Hilfs-Spannungsversorgung (13) über einen DC/DC-Wandler (41) mit Energie versorgt wird, der vorzugsweise der Haupt-Spannungsversorgung (5) zugeordnet ist.

4. Servomotor nach einem der vorhergehenden Anprüche, **dadurch gekennzeichnet**, daß die Hilfs-Spannungsversorgung (13) mindestens einen im Normalbetrieb des Servomotors (1) aufladbaren Kondensator (15) umfaßt.

5. Servomotor nach einem der vorhergehenden Anprüche, **dadurch gekennzeichnet**, daß die Hilfs-Spannungsversorgung (13) eine Batterie (17) und/oder einen Akkumulator (19) umfaßt.

6. Servomotor nach einem der vorhergehenden Anprüche, **gekennzeichnet durch** eine der Haupt- und/oder Hilfs-Spannungsversorgung (5;13) zugeordnete Spannungs-Überwachungsschaltung (31), die eine Störung, insbesondere einen Zusammenbruch der Spannungsversorgung erfaßt.

7. Servomotor nach Anspruch 6, **dadurch gekennzeichnet**, daß die Spannungs-Überwachungsschaltung (31) bei Unterschreiten eines bestimmten unteren Spannungsgrenzwertes eine Notbremsung auslöst.

8. Servomotor nach Anspruch 6 oder 7, **dadurch gekennzeichnet**, daß die Spannungs-Überwachungsschaltung (31) so ausgelegt ist, daß nach einem Unterschreiten des bestimmten unteren Spannungsgrenzwertes die Abbremsung des Servomotors (1) bis zum Stillstand gewährleistet ist.

9. Servomotor nach einem der Ansprüche 6 bis 8, **dadurch gekennzeichnet**, daß die Spannungs-Überwachungsschaltung (31) Steuersignale an die Steuerschaltung (7) abgibt.

10. Servomotor nach einem der Ansprüche 6 bis 9, **dadurch gekennzeichnet**, daß die Spannungs-Überwachungsschaltung (31) bei Überschreiten eines bestimmten oberen Stromgrenzwertes die Bremsschaltung (9) aktiviert.

11. Servomotor nach einem der Ansprüche 6 bis 10, **dadurch gekennzeichnet**, daß die Spannungs-Überwachungsschaltung (31) mit mehreren Steuerschaltungen mehrerer Servomotoren koppelbar ist und daß die Notbremsung dieser mehreren Servomotoren vorzugsweise nacheinander erfolgt.

12. Servomotor nach einem der vorhergehenden Ansprüche, **dadurch gekennzeichnet**, daß die Notabschaltung und Einleitung der Notbremsung des Servomotors (1) dann erfolgt, wenn eine Temperatur-überwachungsschaltung (21) ein Überschreiten einer vorgebbaren oberen Temperaturgrenze ermittelt, wobei die Notbremsung bis zum Stillstand des Servomotors (1) durchgeführt wird und dann die Abschaltung der Energieversorgung des Servomotors (1) erfolgt.

## Claims

1. Servomotor having a main power supply, a control circuit influencing the drive of the servomotor, a brake circuit and an auxiliary power supply which supplies energy to the control circuit in the event of an emergency shutdown of the servomotor, at least during the initiation of emergency braking, characterized in that the auxiliary power supply (13) is supplied with energy by dividing down the voltage present on a data bus (39)

2. Servomotor according to Claim 1, characterized in that the auxiliary power supply (13) is supplied with energy from a DC intermediate circuit (11) assigned to the main power supply (5).

3. Servomotor according to one of the preceding claims, characterized in that the auxiliary power supply (13) is supplied with energy via a DC/DC transformer (41) which is preferably assigned to the main power supply (5).

4. Servomotor according to one of the preceding claims, characterized in that the auxiliary power supply (13) comprises at least one capacitor (15) which can be charged in normal operation of the servomotor (1).

5. Servomotor according to one of the preceding claims, characterized in that the auxiliary power supply (13) comprises a battery (17) and/or an accumulator (19).

6. Servomotor according to one of the preceding claims, characterized by a voltage-monitoring circuit (31) which is assigned to the main and/or auxiliary power supply (5; 13) and detects a malfunction, in particular a failure of the power supply.

7. Servomotor according to Claim 6, characterized in that the voltage-monitoring circuit (31) triggers emergency braking upon undershooting of a specific lower voltage limiting value.

8. Servomotor according to Claim 6 or 7, characterized in that the voltage-monitoring circuit (31) is designed such that braking of the servomotor (1) as far as standstill is ensured after undershooting of the specific lower limiting value.

9. Servomotor according to one of Claims 6 to 8, characterized in that the voltage-monitoring circuit (31) emits control signals to the control circuit (7).

10. Servomotor according to one of Claims 6 to 9, characterized in that the voltage-monitoring circuit (31) activates the braking circuit (9) upon overshooting of a specific upper current limiting value.

11. Servomotor according to one of Claims 6 to 10, characterized in that the voltage-monitoring circuit (31) can be coupled to several control circuits of several servomotors, and in that emergency braking of these several servomotors is preferably performed sequentially.

12. Servomotor according to one of the preceding claims, characterized in that the emergency shutdown and initiation of emergency braking of the servomotor (1) are performed when a temperature-monitoring circuit (21) determines overshooting of a prescribable upper temperature limit, the emergency braking being carried out as far as standstill of the servomotor (1), and the energy supply to the servomotor (1) then being switched off.

## Revendications

1. Servomoteur comportant une alimentation principale en tension, un circuit de commande influençant l'entraînement du servomoteur, un circuit de freinage et une alimentation auxiliaire en tension, qui, en cas de mise hors circuit d'urgence du servomoteur, alimente en énergie le circuit de commande au moins pendant le démarrage d'un freinage d'urgence, caractérisé par le fait que l'alimentation auxiliaire en tension (13) est alimentée en énergie par subdivision de la tension existant sur un bus de données (39).

2. Servomoteur selon la revendication 1, caractérisé par le fait que l'alimentation auxiliaire en tension (13) est alimentée en énergie par un circuit intermédiaire courant continu (11) associé à l'alimentation principale en tension (5).

3. Servomoteur selon l'une des revendications précédentes, caractérisé par le fait que l'alimentation auxiliaire en tension (13) est alimentée en énergie par l'intermédiaire d'un transducteur courant continu/courant continu (41) qui est de préférence associé à l'alimentation principale en tension (5).

4. Servomoteur selon l'une des revendications précédentes, caractérisé par le fait que l'alimentation auxiliaire en tension (13) comporte au moins un condensateur (15) rechargeable en exploitation normale du servomoteur (1).

5. Servomoteur selon l'une des revendications précédentes, caractérisé par le fait que l'alimentation auxiliaire en tension (13) comporte une batterie (17) et/ou un accumulateur (19).

6. Servomoteur selon l'une des revendications précédentes, caractérisé par un circuit (31) de surveillance de la tension qui est associé à l'alimentation principale et/ou à l'alimentation auxiliaire en tension (5 ; 13) et saisit un incident, en particulier une coupure de l'alimentation en tension.

7. Servomoteur selon la revendication 6, caractérisé par le fait que le circuit (31) de surveillance de la tension déclenche un freinage d'urgence en cas de dépassement, par valeur inférieure, d'une valeur limite inférieure déterminée de la tension.

8. Servomoteur selon la revendication 6 ou 7, caractérisé par le fait que le circuit (31) de surveillance de la tension est conçu de façon qu'après un dépassement, par valeur inférieure, de la valeur limite inférieure déterminée de la tension, le freinage du servomoteur (1) jusqu'à l'arrêt est garanti.

9. Servomoteur selon l'une des revendications 6 à 8, caractérisé par le fait que le circuit (31) de surveillance de la tension envoie des signaux de commande au circuit de commande (7).

10. Servomoteur selon l'une des revendications 6 à 9, caractérisé par le fait que le circuit (31) de surveillance de la tension active le circuit de freinage (9) en cas de dépassement, par valeur supérieure, d'une valeur limite supérieure déterminée de l'intensité.

11. Servomoteur selon l'une des revendications 6 à 10, caractérisé par le fait que le circuit (31) de surveillance de la tension peut se coupler avec plusieurs circuits de commande de plusieurs servomoteurs et que le freinage d'urgence de ces plusieurs servomoteurs se fait de préférence successivement.

12. Servomoteur selon l'une des revendications précédentes, caractérisé par le fait que la mise hors circuit d'urgence et le démarrage du freinage d'urgence du servomoteur (1) se font lorsqu'un circuit (21) de surveillance de la température détermine un dépassement, par valeur supérieure, d'une limite supérieure, à prescrire, de la température, le freinage d'urgence se faisant jusqu'à l'arrêt du servomoteur (1) puis le mise hors circuit de l'alimentation du servomoteur (1) en énergie se faisant.
